(19) Europäisches Patentamt
European Patent Office
Office européen des brevets

(11) **EP 2 516 132 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(21) Anmeldenummer: **10803573.4**

(22) Anmeldetag: **23.12.2010**

(51) Int Cl.:
**B29C 49/42** *(2006.01)*   **B29C 49/56** *(2006.01)*
**B29C 49/04** *(2006.01)*

(86) Internationale Anmeldenummer:
**PCT/EP2010/007905**

(87) Internationale Veröffentlichungsnummer:
**WO 2011/076417 (30.06.2011 Gazette 2011/26)**

(54) **ANTRIEBSEINRICHTUNG FÜR EINE EXTRUSIONS-BLASFORMMASCHINE**

CLOSING OPENING DEVICE FOR EXTRUSION BLOW MOULDING MACHINE

DISPOSITIF D'ENTRAÎNEMENT POUR MACHINE DE MOULAGE PAR EXTRUSION-SOUFFLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009   DE 102009060496**

(43) Veröffentlichungstag der Anmeldung:
**31.10.2012   Patentblatt 2012/44**

(73) Patentinhaber: **Hesta Blasformtechnik GmbH&Co. KG**
**73037 Göppingen (DE)**

(72) Erfinder: **BECK, Eberhard**
**72622 Nürtingen (DE)**

(74) Vertreter: **Patentanwälte Bregenzer und Reule Partnerschaftsgesellschaft mbB**
**Rheinstraße 19**
**76532 Baden-Baden (DE)**

(56) Entgegenhaltungen:
**WO-A1-2006/134031      WO-A2-2008/067175**
**DE-A1- 19 528 751      JP-A- 7 032 366**

**Beschreibung**

Die Erfindung betrifft eine Antriebseinrichtung für eine Extrusions-Blasformmaschine zum Öffnen und Schließen einer Blasform mit den im O-berbegriff des Patentanspruchs 1 genannten Merkmalen.

Antriebseinrichtungen für Extrusions-Blasformmaschinen sind in vielfältigen Ausführungen bekannt und teils mit hydraulischen Antriebseinheiten, teils mit elektromechanischen Antriebseinheiten implementiert (DE 44 43 195 A1, JP 7 032 366 A). Aus der WO 2006/134 031 A1 ist eine Antriebseinrichtung gemäß Oberbegriff des Anspruchs 1 bekannt.

Sowohl im Falle elektrohydraulisch gesteuerter als auch im Falle elektromagnetisch gesteuerter Antriebseinrichtungen der genannten Art sind die Formhälften der Blasform auf gemeinsamen Gradführungselementen verschiebbar geführt. Sie sind in der Regel mittels eines Schubumkehrgetriebes kinematisch derart miteinander bewegungsgekoppelt, dass im Falle einer Bewegungseinsteuerung mittels einer an einer der Formhälften angreifender Antriebseinheit einander entgegengesetzte translatorische Hübe gleichen Betrages der Blasformhälften ausgeführt werden. Die die Blasformhälften und die Antriebseinheit umfassende Formen-Schließeinheit ist zwischen von einem horizontal verlaufenden Joch senkrecht aufragenden Schenkeln einer der Grundform nach U- oder geschlossenen rahmenförmigen Spannzange angeordnet, wobei der eine Schenkel eine hubbegrenzende Abstützung für die eine der beiden Formhälften bildet und der andere das rahmenfeste Widerlager für die an der anderen Formhälfte angreifende Antriebseinheit darstellt, das gleichsam als Bezugsort für die funktionellen Bewegungen des Schließsystems dient.

Die bekannten Antriebseinrichtungen sind in der Regel so konzipiert, dass das Anfahren der Schließposition der Blasform, d.h. diejenige Position, in der die Blasformhälften in Kontakt miteinander gelangen, oder in eine Position, die dieser Schließposition sehr nahegelegen ist, in einem Eilgangbetrieb erfolgt, in dem die Blasformhälften sich relativ rasch aufeinander zu bewegen, die Antriebskräfte jedoch vergleichsweise niedrig sind, und erst bei Erreichen der Schließposition oder kurz davor auf einen Lastgangbetrieb umgeschaltet wird, in dem die Antriebseinrichtung mit hoher Kraftübersetzung jedoch entsprechender Geschwindigkeitsuntersetzung betrieben wird, damit in geschlossenem Zustand der Blasform die Schließkraft erzeugbar ist, die erforderlich ist, damit die Form unter der Wirkung des Blasdruckes geschlossen bleibt. Hierfür typische Werte der Schließkraft sind, je nach Größe der herzustellenden, meist flaschenförmigen Formhohlkörper, 40 bis 200 kN.

Bei derartigen, von Eilgang- auf Lastgang-Betrieb umzuschaltenden Schließantrieben kann es als nachteilig angesehen werden, dass das Schließen der Form und, damit einhergehend das Abquetschen überständigen Materials des extrudierten Vorformlings an der Eintrittsseite, an der auch der Blasdorn in die Form eingeführt wird, sowie an der Austrittsseite, an der z.B. einen Boden eines Hohlkörpers bildende Teil des Vorformlings miteinander verschweißt werden müssen, relativ lange dauert. Es besteht daher die Gefahr, dass das sich abkühlende Schlauchmaterial nicht optimal verschweißt wird und Qualitätsmängel auftreten, die zu einem relativ hohen Ausschuss führen. In praxi bedeutet dies, dass mit solchen Maschinen nicht alle gängigen blasfähigen thermoplastischen Kunststoffe verarbeitet werden können und somit ihr Einsatzbereich beschränkt ist.

Als nachteilig ist auch die Komplexität der Antriebseinrichtungen anzusehen, die mit dem Erfordernis der Umschaltbarkeit von Eil- auf Last-Vorschubbetrieb verknüpft ist. Dies gilt insbesondere für elektromechanische, z.B. als Spindeltriebe implementierte Antriebseinheiten, die mit aufwändigen Untersetzungsgetrieben bestückt sein müssen. Werden andererseits relativ einfache Kurbel- oder Kniehebelantriebseinrichtungen als Formenschließantriebe eingesetzt, müssen sehr enge Fertigungstoleranzen eingehalten werden, damit ein präziser Formenschluss erreichbar ist, und es müssen für den Fall, dass Formen unterschiedlicher Dicke verwendet werden, die an Spannplatten der Schließeinheit befestigbar sind, aufwändige Justierarbeiten der Antriebe vorgenommen, d.h. erhebliche Rüstzeiten in Kauf genommen werden, die spürbar zu den Betriebskosten der jeweiligen Blasformmaschine beitragen.

Aufgabe der Erfindung ist es daher, eine Antriebseinrichtung der eingangs genannten Art anzugeben, die bei gleichwohl einfacher Gestaltung ein Erreichen der Schließposition unter Aufbau der erforderlichen Schließkraft in kurzer Zeit ermöglicht und innerhalb eines zweiten Toleranzbereiches die Verwendung unterschiedlich dicker Formhälften ohne Erfordernis einer individuellen Justierung der Antriebseinrichtung ermöglicht.

Diese Aufgabe wird erfindungsgemäß durch die in Patentanspruch 1 angegebene Merkmalskombination gelöst.

Hiernach ist die Schließeinheit der Blasformmaschine an mindestens einem der parallelen Schenkel der Spannzange über ein elastisch vorgespanntes Pufferelement in Schubrichtung - translatorisch - abgestützt, das durch Kompression auf eine der Schließkraft der Formhälften entsprechende Rückstellkraft spannbar ist, und es ist der kinematische Totpunkt der Antriebseinheit, gesehen in Richtung der Schließbewegung der angetriebenen Formhälfte jenseits des Schließhubabschnittes gelegen, ab welchem die Formhälften aneinander in Anlage gelangen und abgestützt sind, wobei das Pufferelement und die Schließeinheit dahingehend aufeinander abgestimmt sind, dass die Vorspannung des Pufferelements im kinematischen Totpunkt der Antriebseinheit mindestens und annähernd der Schließkraft des Schließsystems entspricht, die beim Blasvorgang aufgebaut sein muss. Das Pufferelement ist erfindungsgemäß als doppelt wirkender hydraulischer Linearzylinder ausgebildet, dessen Kolben und Gehäuse mit jeweils einem der gegeneinander beweglichen Elemente der Schließeinheit und des Spannrahmens schub- und zugfest verbunden sind: Der im Schließbetrieb einer Druckerhöhung unterworfene erste Druckraum des Linearzylinders ist mit einem Druckspeicher kommunizierend verbindbar, der auf einen Druck vorgespannt ist, durch dessen Einwirkung auf die Kolbenfläche des Pufferzylinders eine der Antriebskraft entgegenwirkende Schließkraft resultiert. Durch den Kolben sind zwei Druckräume druckdicht gegeneinander abgegrenzt, die von Kolbenstangen unterschiedlichen Durchmessers durchsetzt sind, wobei eine erste Kolbenstange an einer der Schließeinheit abgewandten Seite des Kolbens angeordnet ist und wobei eine zweite Kolbenstange den Kolben zugfest mit dem Spannrahmen verbindet und wobei die erste Kollenstange einen grössen Durchmesser als die zweite Kollenstangs aufweist. Somit ist eine einen ersten der Druckräume axial beweglich begrenzende Ringfläche des Kolbens größer als die den zweiten Druckraum axial begrenzende Ringfläche. Wenn in die Druckräume derselbe Druck eingekoppelt ist, wirkt auf den Kolben eine resultierende Kraft. Schließlich sind die Druckräume mittels eines 2/2-Wege-Ventils wahlweise miteinander kommunizierend verbindbar und gegeneinander absperrbar.

Hierdurch erzielte Vorteile der erfindungsgemäßen Antriebseinrichtung sind zumindest die folgenden:

Das Pufferelement schafft genügend Spielraum für unter steigender Abstützkraft erfolgende elastische Aufweitungsdeformationen der Spannzange und erlaubt es daher, mit relativ hoher Vorschubgeschwindigkeit die Blasformhälften in Anlage miteinander zu bringen, mit der Folge, dass das Abquetschen von Materialüberständen in kürzester Zeit erfolgen kann. Bedingt durch die elastische bzw. quasielastische Vorspannung des Pufferelements baut sich eine in den Bereich der erforderlichen Schließkraft reichende Rückstellkraft auf, die im Ergebnis zu einer elastischen Deformation - Aufweitung - der Spannzange im Sinne einer Vergrößerung des Abstandes der Stützstellen an den parallelen Schenkeln derselben führt, bis im kinematischen Endpunkt, dem Totpunkt der Vorschubbewegung, ein hinreichender Betrag der Schließkraft erreicht wird. Bedingt durch eine signifikante Wegreserve, die zwischen dem Aufeinandertreffen der Blasformhälften bis zum Ende des Vorschub-Weges der Antriebseinrichtung bereitgestellt ist, können Formhälften verwendet werden, deren Dicke innerhalb eines relativ großen Bereiches, in praxi einigen Millimetern variieren kann, ohne dass Justierarbeiten zur Anpassung der Antriebseinrichtung an verschiedene Formdicken vorgenommen werden müssen. Weiter ist es, dank der Möglichkeit auf einen Last-Vorschubbetrieb beim Schließen der Form verzichten zu können, energetisch vorteilhaft, die kinetische Energie der Formhälften für den Aufbau der Schließkraft zu einem erheblichen Teil nutzen zu können.

Dies ist auf einfache Weise in bevorzugter Gestaltung der Antriebseinrichtung dadurch möglich, dass als Antriebseinheit ein Kurbeltrieb vorgesehen ist, dessen Schubstange gelenkig mit der dem Antrieb zugewandten Formhälfte bzw. einer diese tragenden Spannplatte verbunden ist. Hierdurch wird eine einfache, robuste, funktionssichere und gleichwohl preisgünstige Gestaltung der Antriebseinrichtung erzielt, die vielfältig änderbar und an vorgegebene Verhältnisse anpassbar ist.

Hierbei ist es besonders vorteilhaft, wenn der im Pufferelement herrschende hydrostatische Druck mittels eines elektronischen oder elektromagnetischen Drucksensors erfassbar ist, dessen Ausgangssignal zur Funktionsüberwachung unter Sicherheits-Aspekten, aber auch zur Antriebssteuerung der Antriebseinrichtung gleichermaßen nutzbar ist.

In der durch die Merkmale des Anspruchs 4 umrissenen Gestaltung der erfindungsgemäßen Antriebseinrichtung ist deren Raumbedarf, in Vorschubrichtung der Blasformhälften gesehen, vergleichsweise gering.

In der Gestaltung der Antriebseinrichtung gemäß Anspruch 5 ist diese, für sich gesehen als einfach montierbare Baueinheit realisierbar.

Zweckmäßig kann es auch sein, wenn das Pufferelement in die Schubstange des Kurbeltriebes integriert ist.

Die Auslegung der Antriebseinrichtung gemäß Anspruch 7 ermöglicht eine bedarfgerechte Vorgabe eines hinzunehmenden Variationsbereiches der Schließkraft, die während des Blasvorganges einzuhalten ist. Hierbei ist es wiederum vorteilhaft, wenn, wie gemäß Anspruch 8 vorgesehen, eine Schließkraftbegrenzung einstellbar vorgebbar ist.

Durch die Gestaltung der Antriebseinrichtung gemäß Anspruch 9 wird ein schonender Betrieb der Blasformmaschine gewährleistet. Insbesondere ist ein gleichsam selbstjustierender Betrieb möglich, der eine hohe Widerholgenauigkeit ergibt und Ausschuss auf ein Minimum reduziert. Durch den schonenden Betrieb wird auch eine erhebliche Energieeinsparung erzielt.

In sinngemäßer Anpassung an den Einsatzfall ist die erfindungsgemäße Antriebseinrichtung, wie gemäß Anspruch 10 vorgeschlagen, auch für den Kalibrierantrieb eines Blasdorns geeignet.

Weitere Einzelheiten der erfindungsgemäßen Antriebseinrichtung ergeben sich aus der nachfolgenden Beschreibung spezieller Ausführungsbeispiele anhand der Zeichnung. Es zeigen:

Fig.1a    ein Schließsystem für die Blasform einer Extrusions-Blasformmaschine in schematisch vereinfachter Seitenansicht,

Fig. 1b    das Schließsystem gemäß Fig. 1a mit schematisch vereinfachter Draufsicht, teilweise im Schnitt längs einer die zentralen Achsen paralleler Führungsstangen des Schließsystems enthaltenden Ebene, teilweise im Schnitt längs einer parallele Dreh- bzw. Schwenkachsen der Antriebseinrichtung dieses Formen-Schließsystems enthaltenden Ebene,

Fig. 2    Einzelheiten einer hydraulischen Puffereinheit, gemäße(n).

Fig. 3    eine schematisch vereinfachte Ersatzschaltbilddarstellung eines weiteren Ausführungsbeispiels und

Fig. 4    eine spezielle Gestaltung der Puffereinheit einer erfindungsgemäßen Antriebseinrichtung in einer der Darstellung der Fig. 2 analogen Darstellung.

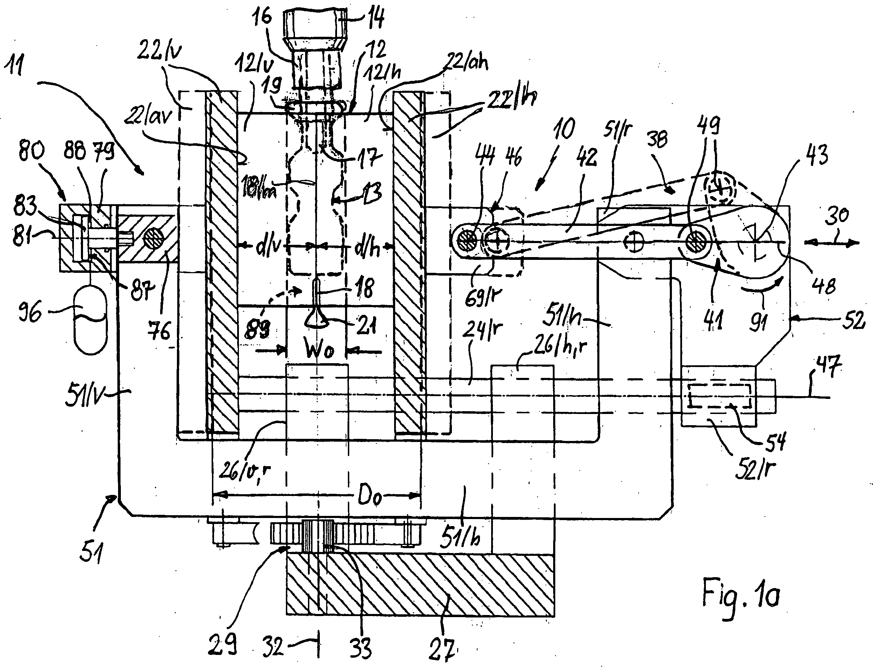

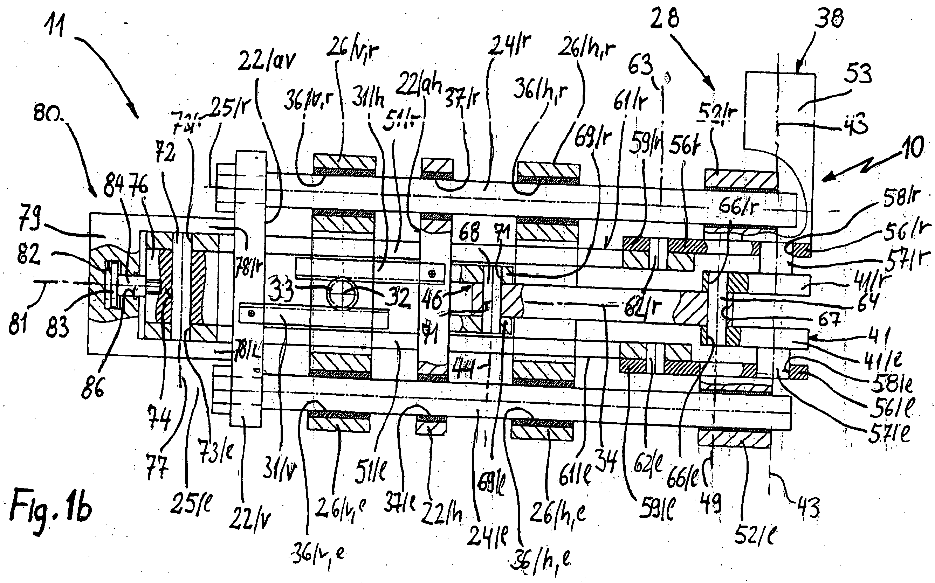

In den Fig. 1a und 1b ist insgesamt mit 10 eine Antriebseinrichtung bezeichnet, die bei einer insgesamt mit 11 bezeichneten Extrusions-Blasformmaschine zum Öffnen und Schließen einer insgesamt mit 12 bezeichneten, zwei Blasformhälften 12/v und 12/h umfassenden Blasform dient, mittels derer z.B. ein flaschenförmiger Formhohlkörper, der lediglich in der Fig. 1 a gestrichelt angedeutet ist, im Extrusions-Blasverfahren herstellbar sein soll.

Hierbei wird ein durch Extrusion mittels eines lediglich schematisch angedeuteten Extruders hergestellter Abschnitt eines schlauchförmigen Vorformlings 16, während die Bläsförm 12 geöffnet ist, in den zwischen den beiden Formhälften 12/v und 12/h frei gewordenen Bereich eingebracht und, nachdem die Form 12 durch Zusammenrücken der Formhälften 12/v und 12/h "dicht" geschlossen ist, durch Aufblasen mittels eines in den Kälibrierbereich, den Halsbereich des flaschenförmigen herzustellenden Hohlkörpers eingeführten Blasdorns 17, der mit Druckluft beaufschlagbar ist, in die gestrichet angedeutete Gebrauchsform aufgeblasen. Hierbei muss die Blasform, die auf einem großen Flächenbereich unter dem zum Aufblasen des Hohlkörpers 13 erforderlichen Binnendruck steht, mit einer entsprechend hohen Schließkraft, die, je nach Maschinengröße, Werte zwischen 40 kN und 120 kN betragen kann, -geschlossen, d.h. in der in der Fig. 1a dargestellten Konfiguration gehalten werden, in der die Blasformhälften 12/1 und. 12/v und 12/h entlang einer Trennfuge 18, die an der Oberseite der Blasform durch diese und den Blasdorn 17 geschlossen ist, dicht aneinander anliegen.

Nachdem der Formhohlkörper, der in einem heißen, plastifizierten Zustand des Vorformlings aufgeblasen worden ist, soweit abgekühlt ist, dass er hinreichend formstabil geworden ist, werden die Blasformhälften 12/v und 12/h zum Öffnen der Blasform 12 soweit auseinander gerückt, dass der Hohlkörper 13 mittels geeigneter Greifer aus der Blasform 12 entnehmbar und gegebenenfalls zu weiteren, nicht dargestellten Arbeitsstationen transportierbar ist, an denen schematisch angedeutete Materialüberstände 19 und 21 entfernt und/oder weitere Bearbeitungen vorgenommen werden können.

Damit die Blasformmaschine 11 zur Herstellung verschiedener geformter Formhohlkörper 13 verwendbar ist, sind die Blasformhälften 12/v und 12/h an stabilen Spannplatten 22/v bzw. 22/h lösbar befestigt, die ihrerseits Funktionselemente eines insgesamt mit bezeichneten Formen-Schließsystems sind, das als weitere Funktionselemente zwei parallele Führungsstangen 24/l und 24/r umfasst, die fest mit der einen, gemäß der Darstellung der Fig. 1 linken Spannplatte 22/v verbunden und gegenüber der anderen Spannplatte 22/h gleitend beweglich geführt sind. Weiter umfasst das Formen-Schließsystem Gleitführungsblöcke 26/v, l und 26/v, r, die zwischen den beiden Spannplatten 22/v und 22/h, jeweils in einem deutlichen Abstand von diesen, angeordnet und in der aus der Fig. 1a ersichtlichen Anordnung mit einem ortsfesten Basisblock 27 der Blasformmaschine 11 fest verbunden sind, sowie weitere, rückwärtige Gleitführungsblöcke 26/h, l und 26/h, r, die ebenfalls, wie aus der Fig. 1a ersichtlich, fest mit dem Basisblock 27 verbunden sind. Das Schließsystem umfasst des weiteren eine insgesamt mit 28 bezeichnete Antriebseinheit, die an der einen, hinteren Spannplatte 22/h angreift, derart, dass diese, in Richtung des Doppelpfeils 30 vor und zurück bewegbar ist, sowie ein insgesamt mit 29 bezeichnetes Schubumkehrgetriebe, das die translatorischen Auslenkungshübe der angetriebenen Spannplatte 22/h in damit korrelierte, zu diesen gegensinnig erfolgende, translatorische Bewegungen der anderen Spannplatte 22/v umsetzt.

Dieses Schubumkehrgetriebe 29 ist mittels zweier Zahnstangen 31/v und 31/h realisiert, deren eine in der aus der Fig. 1b ersichtlichen Anordnung an der vorderen Spannplatte 22/v und deren andere an der hinteren Spannplatte 22/h festgelegt ist, wobei diese Zahnstangen mit einem um eine blockfeste, vertikale Drehachse 32 drehbaren Ritzel 33 auf einander gegenüberliegenden Seiten desselben in kämmendem Eingriff stehen, dessen Drehachse 32 in der zwischen den beiden Führungsstangen 24/l und 24/r verlaufenden Längsmittelebene 34 der Antriebseinrichtungen 10 der Extruder-Blasformmaschine 11 liegt.

Die Spannplatten 22/v und 22/h und die Führungsstangen 24/l und 24/r sind derart aneinander befestigt, dass die zentralen Achsen 25/l und 25/r der Führungsstangen 24/lr senkrecht zu den im Wesentlichen ebenen Anlageflächen 22/av und 22/ah verlaufen, an denen die Formhälften 12/v bzw. 12/h festlegbar sind, die ihrerseits die Längsmittelebene 34 der Antriebseinrichtung 10 rechtwinklig überqueren.

Die vorderen, zwischen den Spannplatten 22/v und 22/h angeordneten Gleitführungsblöcke 26/v l und 26/vr und die hinteren, zwischen der hinteren Spannplatte 22/h und der Antriebseinheit 28 angeordneten. Gleitführungsblöcke 26/hl und 26/hr sind mit paarweise miteinander fluchtenden, bohrungsförmigen Führungsöffnungen 36/vl und 36/hl bzw. 36/v, r sowie 36/hr versehen, in denen die über die vordere Spannplatte 22/v fest miteinander verbundenen, zylindrisch stabförmigen Führungsstangen 24/l und 24/r gleitend verschiebbar geführt sind.

Auch die hintere Spannplatte 22/h des Formen-Schließsystems ist mit entsprechenden Führungsöffnungen 37/l und 37/r versehen, welche die spannplattenseitigen Führungselemente bilden, mittels derer die hintere Spannplatte 22/h auf den Führungsstangen 24/l und 24/h in Richtung des Pfeils 30 der Fig. 1a hin- und her-verschiebbar geführt ist.

Die Antriebseinheit 28 umfasst als Antriebselement einen insgesamt mit 38 bezeichneten Kurbeltrieb, der eine mittels eines Elektromotors 53 dreh- bzw. schwenkbar antreibbare Kurbel 41 und eine mit dieser gelenkig verbundene Schubstange 42 umfasst, die ihrerseits mit der hinteren Spannplatte 22/h gelenkig gekoppelt ist, derart, dass dieser Kurbeltrieb zusammen mit den Führungsstangen 24/r und 24/l als Linearantrieb für die Schließ- und Öffnungsbewegungen der Formhälften 12/v und 12/h wirkt.

Die Dreh- bzw. Schwenkachse 43 der Kurbel 41 und die Gelenkachse 44 des insgesamt mit 46 bezeichneten Koppelgelenks, über das die Schubstange 42 mit der hinteren Spannplatte 22/h kinematisch gekoppelt ist, haben von der als Bezugsebene angenommenen Achsebene 47, die durch die zentralen Achsen 25/l und 25/r der Führungsstangen 24/l und 24/r aufgespannt ist, den selben vertikalen Abstand und definieren daher eine zu dieser Bezugsebene 46 parallele "horizontale" Achsebene, 48, in der, wenn sich der Kurbeltrieb 38 in der in der Fig. 1a dargestellten, gestreckten Konfiguration befindet, auch die Kurbelgelenkachse 49 verläuft. Dieser Konfiguration des Kurbeltriebs und der insoweit erläuterten Antriebseinrichtung entspricht dem maximalen Betrag der Schließkraft, der mittels der insoweit erläuterten Schließantriebs entfaltbar ist.

Zur Einleitung der mittels der Antriebseinheit 28 entfaltbaren Kräfte in das Formenschließsystem und Abstützung der im Blasbetrieb auftretenden, den Schließkräften entgegengesetzt gerichteten Reaktionskräften ist ein insgesamt mit 51 bezeichneter, der Grundform nach U-förmiger Spannrahmen vorgesehen, der, gesehen in der Ansichtsdarstellung der Fig. 1a, von einem horizontal verlaufenden Basisschenkel 51/b senkrecht aufragende parallele Rahmenschenkel 51/v und 51/h umfasst, zwischen denen das Schließsystem in der aus der Fig. 1a ersichtlichen Anordnung gelagert ist.

Bei dem zur Erläuterung dargestellten Ausführungsbeispiel ist der Spannrahmen durch zwei flachstabförmige U-Rahmenelemente 51/l und 51/r deckungsgleicher Form gebildet, die, gesehen in der Draufsichtsdarstellung der Fig. 1b in seitlichem Abstand voneinander und symmetrisch bezüglich der Längsmittelebene 34 des Formenschließsystems angeordnet und durch als Distanzelemente wirkende weitere Funktionselemente der Antriebseinrichtung 10 in definiertem Abstand voneinander gehalten sind.

Das eine dieser weiteren Funktionselemente ist als ein den Kurbeltrieb 38 einschließlich dessen Antriebsmotor 53 tragender, insgesamt mit 52 bezeichneter Schlitten ausgebildet, der mit dem Spannrahmen zug- und schubfest verbunden ist und zusammen mit diesem in Richtung des Pfeils 30 der Fig. 1a erfolgende translatorische Hübe kleinen Betrages ausführen kann.

Die diesbezügliche Führung vermitteln zwei Führungbuchsen 52/l und 52/r, mittels derer der Schlitten 52 auf den antriebsseitigen Endabschnitten der Führungsstangen 24/l und 24/r hin- und her-verschiebbar geführt ist. Diese Führungsbuchsen sind fest miteinander verbunden, z.B. durch eine lediglich schematisch in der Fig. 1 a dargestellte Brücke 54, die sich zwischen den Führungsbuchsen 52/l und 52/r erstreckt und mit diesen einstückig ausgeführt sein kann.

Weiter umfasst der Schlitten 52 in symmetrischer Anordnung bezüglich der Längsmittelebene 34 der Antriebseinrichtung 10 zwei plattenförmige Wangen 56/l und 56/r, die fest mit den Führungsbuchsen 52/l und 52/r bzw. der diese miteinander verbindenden Brücke 54 verbunden sind.

An diesen Wangen 56/l und 56/r ist die Kurbel 41 um die Achse 43 drehbar gelagert, wobei schematisch angedeutete Lagerzapfen 57/l und 57/r der Kurbel mit komplementären Lagerbohrungen 58/l und 58/r der Wangenplatten 56/l und 56/r in formschlüssigem Eingriff stehen, wodurch sowohl Verrückungen der Kurbel 41 in Richtung ihrer Drehachse 43 als auch radiale Bewegungen derselben gegenüber ihrer Drehachse ausgeschlossen sind.

An der einen, gemäß der Darstellung der Fig. 1 rechten, Wangenplatte 56/r ist der Antriebsmotor 53 des Kurbeltriebes 38 fest montiert.

Die Wangenplatten 56/l und 56/r des den Kurbeltrieb tragenden Schlittens 52 haben zum Schließsystem hinweisende, fahnenförmige Kopplungsabschnitte 59/l und 59/r, die sich mit oberen Endabschnitten der plattenförmigen Spannrahmenelementen 51/l und 51/r überlappen und gleitfähig an deren einander abgewandten Außenflächen 61/l bzw. 61/r anliegen. Innerhalb dieser Überlappungsbereiche sind die fahnenförmigen Kopplungsabschnitte 59/l und 59/r der plattenförmigen Wangen 56/l und 56/r sowie die U-förmigen Rahmenelemente 51/l und 51/r mit - im montierten Zustand - mit-einander fluchtenden Bohrungen versehen, die paarweise von Ankerbolzen 62/l und 62/r durchquert sind, wodurch der Schlitten 52 mit dem Spannrahmen 51 zug- und schubfest verbunden ist, gleichwohl jedoch rotatorische Relativbewegungen geringer azimutaler Auslenkung des Schlittens und des Spannrahmens 51 um die gemeinsame zentrate Achse 63 dieser Verankerungsbolzen 62/l und 62/r möglich sind.

Verankerungselemente, die ein Ausrücken der Verankerungsbolzen 62/l und 62/r aus ihren Verankerungspositionen verhindern, sind der Einfachheit hatber nicht dargestellt.

Die Kurbel 41 besteht aus zwei plattenförmigen Kurbelwangen 41/l und 41/r der aus der Fig. 1a ersichtlichen Kontur; diese Kurbelwangen 41/l, r sind mit je einem der Lagerzapfen 57/l bzw. 57/r fest verbunden und über einen Gelenkbolzen 64 miteinander verbunden, der durch miteinander fluchtende Augbohrungen 66/l und 66/r der beiden Kurbelwangen 41/l und 41/r und eine Gelenkbohrung 67 der ihrerseits stabförmig ausgebildeten Schubstange 42 hindurch tritt und somit deren um die Gelenkachse 49 bewegliche Verbindung derselben mit der Kurbel 41 vermittelt.

Auf analoge Weise ist das die gelenkige Verbindung der Schubstange 42 mit der hinteren Spannplatte 22/h des Formschließsystems vermittelnde Kuppelgelenk 46 realisiert, dessen Gelenkbolzen 68 durch miteinander fluchtende Augbohrungen zweier fest mit der Spannplatte verbundener Augplatten 69/l und 69/r sowie eine Durchgangsbohrung 71 durchquert, die an dem dem Kurbelgelenk abgewandten Ende der Schubstange 42 angeordnet ist.

Die beiden flachstabförmigen Rahmenelemente 51/r und 51/l des U-förmigen Spannrahmens 51 sind im oberen Bereich des gemäß Fig. 1a vorderen Schenkels 51/v des Spannrahmens 51 durch einen Querbolzen 72 miteinander verbunden, der durch miteinander fluchtende Bohrungen 73/l und 73/r der Rahmenelemente sowie eine mit diesen koaxiale Bohrung 74 eines quaderförmigen Distanzstückes 76 hindurch tritt, das auf diese Weise an dem vorderen Rahmenschenkel 51/v verankert ist. Dieses Distanzstück ist gleitfähig an den einander zugewandten Innenflächen der Rahmenelemente 51/l und 51/r gelagert, so dass es um kleine Winkelbeträge um die gemeinsame Achse 77 der Bohrungen 73/l) und 73/r der Rahmenelemente 51/l) und 51/r sowie der Bohrung 74 des Distanzstückes 76 schwenkbar ist.

Der das Distanzstück 76 umfassende, obere Schenkelbereich des vorderen Rahmenschenkels 51/v ist seinerseits gleitfähig zwischen stabilen, parallelen Wangen 78/l und 78/r angeordnet, mittels derer ein als kurzhubiger, linearen Hydrozylinder ausgebildetes, insgesamt mit 80 bezeichnetes Pufferelement zug- und schubfest mit der vorderen Spannplatte 22/v des Formenschließsystems 23 verbunden ist.

Das Pufferelement 80 ist in ein stabiles, die beiden Wangen 78/l und 78/r einstückig miteinander verbindendes Joch 79 integriert, in das eine zweistufige Bohrung eingebracht ist, deren zentrale Achse 81 die gemeinsame Achse 77 der Bohrungen 73/l und 73/r sowie 74 der Spannrahmenelemente rechtwinklig schneidet. In der dem Durchmesser nach größeren Bohrungsstufe des Jochs 79 ist druckdicht beweglich ein Pufferkolben 83 geführt, mit dem fest eine Kolbenstange 84 verbunden ist, die durch die Bohrungsstufe 86 kleineren Durchmessers hindurchtritt, die über eine radiale Ringfläche an die zylindrische Begrenzungsfläche der größeren Bohrungsstufe 82 anschließt.

Diese Ringfläche bildet die gehäusefeste axiale Begrenzung eines Ringraumes 88, der axial beweglich durch den in der größeren Bohrungsstufe 82 druckdicht verschiebbar geführten Kolben 83 begrenzt ist. Der Kolben 83 ist über seine Kolbenstange 84 fest mit dem Distanzstück 76 verbunden, z.B. mit diesem verschraubt.

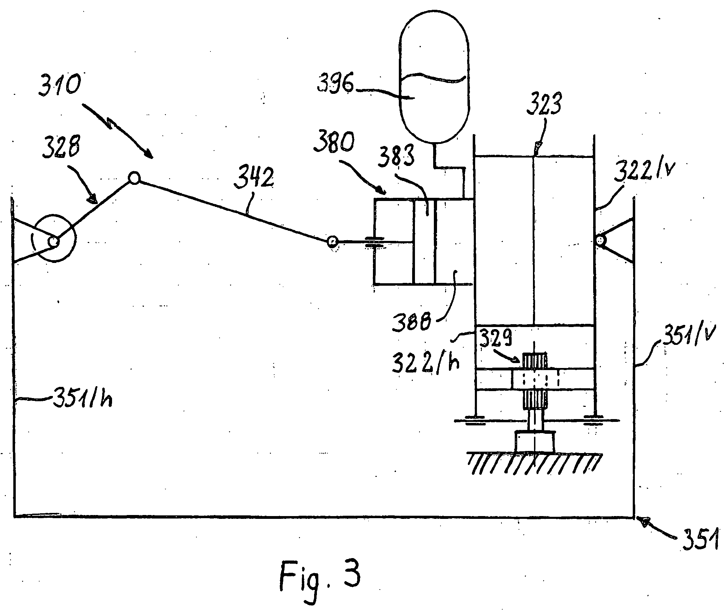

In den Ringraum ist, worauf anhand der Fig. 3 noch näher eingegangen wird, ein Druck definierten Betrages einkoppelbar, durch den die Mihdest-Schließkraft einstellbar vorgebbar ist, mit der im geschlossenen Zustand des Formenschließsystems 23 die Formhälften 12/v und 12/h in Anlage aneinander gedrückt sind.

Der durch den Kolben 83 gegen den Ringraum 88 beweglich abgegrenzte "rückseitige" Gehäuseraum 89, der konstruktionsbedingt vorhanden ist, steht mit der Umgebungsatmosphäre in kommunizierender Verbindung und ist insoweit "drucklos" gehalten.

Im geöffneten- Zustand des Formenschließsystems 23 ist der Kolben 83 durch die Wirkung des in dem Ringraum 88 herrschenden Druckes in seine am weitesten von der Ringfläche 87 entfernte "Grundstellung" gedrängt, die z.B. durch Anlage des Kolbens an einer ihm gegenüberliegenden Gehäusefläche markiert ist, oder durch Anlage des vorderen Spannrahmenschenkels 51/v an dem Joch 79 des Pufferelements 80 markiert sein kann.

Die genannte Grundstellung kann auch dadurch markiert sein, dass die vordere Spannplatte 22/v an der ihr benachbarten Innenseite des vorderen, aufragenden Schenkels 51/v des Spannrahmens 51 anliegt, wie gestrichelt in der Fig. 1a angedeutet. Mit dieser Stellung verknüpft ist dann auch eine noch abgewinkelte Konfiguration des Kurbeltriebes 38, wie in der Fig. 1 a ebenfalls gestrichelt angedeutet. Hierbei versteht es sich, dass die genannten Positionen dahingehend aufeinander abgestimmt sein müssen, dass im geöffneten Zustand der Blasform 12 die Zuführung des schlauchförmigen Vorformlings in den Blasbereich, einerseits, und andererseits die Entnahme des geblasenen Formhohlkörpers möglich sind, und dass im geschlossenen Zustand der Blasform 12 eine hinreichende Schließkraft entfaltbar ist, um die Form unter dem wirksamen Blasdruck geschlossen zu halten.

Die insoweit hinsichtlich ihres Aufbaues erläuterte Antriebseinrichtung 10 arbeitet in einem typischen Blaszyklus wie folgt:

Von der geöffneten Konfiguration des Formenschließsystems 23 ausgehend, in welchem der Abstand Do der Spannplatten 22/v und 22/h voneinander um die lichte Weite Wo eines zwischen den Formhälften 12/v und 12/h freigegebenen Öffnungsspalts 89 größer ist als die Summe der Dicken d/v und d/h der Formhälften 12/v und 12/h, wird, nachdem der schlauchförmige Vorformling in den Blasbereich zwischen den Blasformhälften 12/v und 12/h eingebracht worden ist, zum Schließen der Blasform 17 der Antriebsmotor derart angesteuert, dass sich die Kurbel, gesehen in der Darstellung der Fig. 1 a in Richtung des Pfeils 91, d.h. im Gegenuhrzeigersinn um ihre Schwenkachse 43 dreht, mit der Folge, dass die Formhälften 12/v und 12/h kinematisch gekoppelt durch den Zahnstangentrieb 31/v, 31/h, mit gleicher Geschwindigkeit bzw. dem Betrage nach gleichen zeitbezogenen inkrementalen Hüben aufeinander zu bewegen.

In dieser Anfangsphase der Schließbewegung erfolgt eine Beschleunigung der beweglichen Elemente der Antriebseinrichtung 10 dahingehend, dass die beiden Formhälften sich jeweils mit gleicher Momentan-Geschwindigkeit aufeinander zu bewegen, bis die Position erreicht wird, in der aus der Form herausragende die Oberfläche 19 und 21 bildende Abschnitte des Vorformlings zusammengedrückt und abgequetscht werden müssen.

Spätestens dann, wenn die genannten Quetschvorgänge einsetzen, wird der Verschiebung der Formhälften 12/v und 12/r in die Schließstellung der Blasform 12 eine zunehmende Kraft entgegengesetzt, die zu einer Abbremsung der beweglichen Teile der Antriebseinrichtung 10 führen kann, was jedoch wegen einer dadurch bedingten Verlängerung des Quetschvorgangs bei einer Verwendung von Kunststoffen, die nur in einem engen Temperaturintervall die für den Blasvorgang geeignete Plastizität haben, und daher schon bei geringer Abkühlung relativ hart und spröde werden, ungünstig ist.

Um eine derartige Abbremsung zu vermeiden, zumindest aber zu verringern, ist der Kurbeltrieb 38 so gestaltet, dass die beiden Formhälften, wenn sie in der zwischen den Spannplatten 22/v und 22/h verlaufenden Quermittelebene 18/m des Formenschließsystems 23 zusammentreffen, jeweils noch eine Geschwindigkeit um 0,25 ms$^{-1}$ haben und hiernach erst eine nennenswerte Abbremsung-der beweglichen Elemente der Antriebseinrichtung eintritt; diese ergibt sich aufgrund der konstruktiv vorgegebenen Kinematik durch elastische Aufweitung des Spannrahmens 51, derart, dass der Abstand der oberen Enden seiner seitlichen Schenkel 51/v und 51/r größer wird und der Spannrahmen 51 mit zunehmender Aufweitung eine zunehmende elastische Rückstellkraft entfaltet, deren Maximalbetrag dann erreicht ist, wenn der Kurbeltrieb 38 die in der Fig. 1 a dargestellte, "gestreckte" Konfiguration hat, in der die Drehachse 43 der Kurbel, die Kurbelgelenkachse 49 und die Verbindungsgelenkachse 44 und, konstruktiv bedingt, auch die zentralen Achsen der Ankerbolzen 62/l und 62/r sowie die zentrale Achse 77 des Verankerungs-Querbolzens 72 in einer gemeinsamen "Achs"-Ebene verlaufen, welche parallel zu der durch die zentralen Achsen 25/l und 25/r der Führungsstangen 24/l und 24/r aufgespannten Ebene verläuft.

Diese Aufweitung des Spannrahmens 51 ergibt sich daraus, dass der Kurbeltrieb 38, wenn er aus der in der Fig. 1 a gestrichelt eingezeichneten "geknickten" Ausgangskonfiguration von Kurbel und Schubstange in die der Schließstellung der Blasform 12 zugeordnete "gestreckte" Konfiguration übergeht, zunächst die Relativbewegungen der Blasformhälften 12/v und 12/h auslöst, die bis in deren Anlage aneinander entlang der Formen-Mittelebene 18/m führen, d.h. in eine Konfiguration, in der die Kurbel-Schubstangen-Einheit noch nicht gestreckt ist, sondern die Gelenkachse 49 des Kürbelgelenks noch in einem Abstand von der Achsebene 48, oberhalb derselben, verläuft.

Sobald diese geschlossene Konfiguration der Blasform 12 erreicht ist, bleiben die Blasformhälften und die diese tragenden Spannplatten 22/v und 22/h in dieser Position "ortsfest" stehen. Eine weitere Drehung der Kurbel 41, die schließlich bis in die gestreckte Anordnung des Kurbeltriebes führt, derart, dass die Drehachse 43, die Kurbelachse 49 und die Kurbelgelenkachse 44 koplanar verlaufen, führt, wegen der ortsfest bleibenden Anordnung des Schließsystems zum einen dazu, dass im Bereich des oberen Endes des rechten Rahmenschenkels 51/h auf diesen eine Zugbeanspruchung "nach rechts" wirkt, die über die Ankerbolzen 62/l und 62/r, die diesen rechten Rahmenschenkel 51/h mit den die Kurbel tragenden wangenförmigen Platten 56/l und 56/r zug- und schubfest koppeln, in den Spannrahmen 51 eingeleitet wird. Diese Zugkraft "nach rechts" wird auf den Spannrahmen 51 insgesamt übertragen und wirkt auch den oberen Endabschnitt des linken Rahmenschenkels 51/v, der zug- und schubfest mit der vorderen Spannplatte 22/v gekoppelt ist. Dies hat zur Folge, dass auch an der der Form abgewandten Vorderseite der vorderen Spannplatte 22/v eine Aufweitung des Spannrahmens 51 eintritt, der über das zug- und schubfest an ihm verankerte Distanzstück fest mit dem Kolben 83 des Pufferelements 80 verbunden ist, der seinerseits durch seine hydraulische Abstützung an dem Joch 79 des Gehäuses des Pufferelements 80 auch an der vorderen Spannplatte 22/v des Schließsystems 23 abgestützt ist, so dass eine auf den Spannrahmen 51 insgesamt wirkende Kraft in Richtung des Pfeils "nach rechts" zu einer elastischen Verformung des Spannrahmens im Sinne einer Aufweitung seiner Rahmenschenkel 51/v und 51/r führt. Dadurch wird als Schließkraft für die Blasform die elastische Vorspannung nutzbar, die durch die Aufweitung des Spannrahmens 51 erzielt wird.

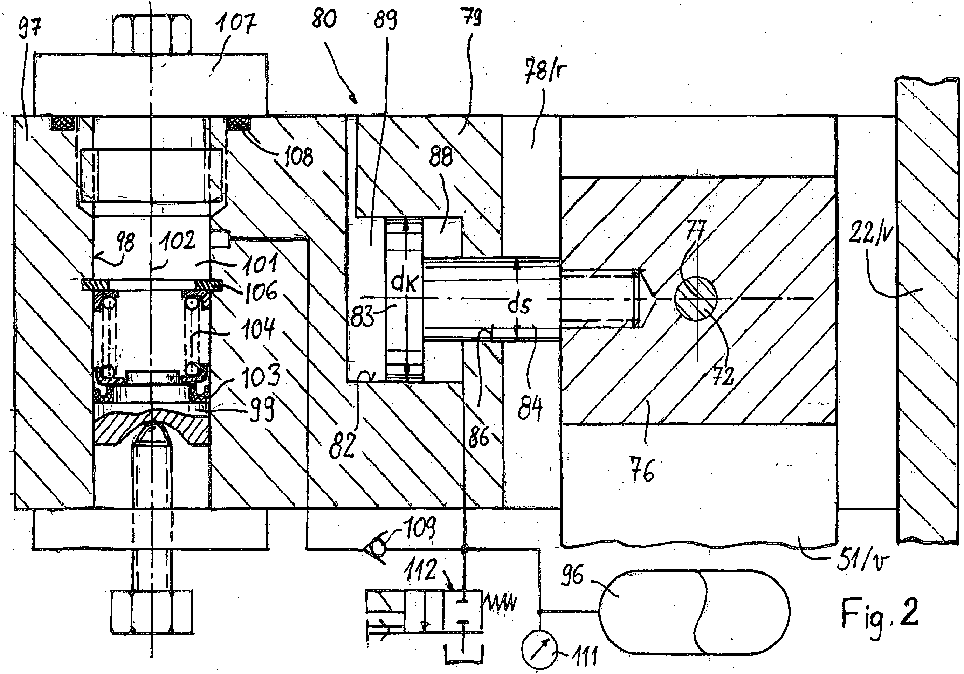

Für das Pufferelement 80, zu dessen Erläuterung nunmehr auch auf die Einzelheiten der Fig. 2 Bezug genommen wird, sei, ohne Beschränkung der Allgemeinheit, eine Gestaltung und Art der Benutzung dahingehend vorausgesetzt, dass schon von Beginn des Schließvorganges an, d.h. bei noch geöffneter Form 12, in den Ringraum 88 des Joches 79 ein Mindestdruck $p_{min}$ eingekoppelt wird, der, multipliziert mit der wirksamen Ringfläche Ar des Kolbens 83 der Schließkraft entspricht, die erforderlich ist, die Blasform 12 unter der Wirkung des Blasdruckes zuverlässig geschlossen zu halten.

Durch diese Auslegung des Pufferelements 80 ist sichergestellt, dass im weiteren Verlauf der Kurbeldrehung, die letztlich in die gestreckte Konfiguration des Kurbeltriebes 38 - den Totpunkt der Kurbetbewegung - führt, die die Formhälften in Anlage aneinander drängende Kraft mindestens dem Be trag der erforderlichen Schließkraft zuzüglich einer Sicherheitsmarge entspricht.

Bei der Auslegung des Schließsystems 23 auf eine Schließkraft von $4.10^4$N und einem Mindestdruck $P_{min}$ von 150 bar in dem Ringraum 88 ergibt sich für die erforderliche Kolbenfläche Ar ein Wert um 27 cm$^2$ und bei einem Durchmesser der Kolbenstange 84 von 3 cm für den Durchmesser dk des Kolbens 83 des Püfferelements 80 ein Wert von etwa 6,6 cm.

Weiter davon ausgehend, dass die Aufweitung der aufragenden Schenkel 51/v und 51/h des Spannrahmens im Bereich ihrer oberen Enden unter dem Einfluss der Schließkraft insgesamt 2 mm beträgt, d.h. der Kolben 83 in der Zylinderbohrung 97 eine Verschiebung von 1 mm im Sinne einer Verkleinerung des Ringraumes 88 erfährt, hat das Volumen Vs, das als Folge des Schließvorganges aus dem Ringraum 88 in den mit diesem in kommunizierender Verbindung stehenden Druckspeicher 96 verdrängt werden muss, ein Betrag von 2,7 cm$^3$, was in Relation zu dem im Druckspeicher 96 gespeicherten Druckmedium, das unter dem "Anfangs"-Druck von 150 bar stand, zu einer mehr oder weniger ausgeprägten Druckerhöhung in dem Speicher führt.

Diese Druckerhöhung kann auf einfache Weise dadurch gering gehalten werden, dass das Speichervolumen sehr viel größer gewählt wird als das Volumen des aus dem Pufferzylinder zu verdrängenden Druckmediums.

Das durch die Puffereinheit 80 gebildete hydraulische System ist als ein geschlossenes System in dem Sinne ausgebildet, dass im Betrieb keinerlei Druckmedium zugeführt wird, d.h. das Pufferelement als ein hermetisch dichtes System arbeitet, das zumindest über einen Blaszyklus hinweg, in praxi jedoch über zahlreiche aufeinander folgende Zyklen hinweg keiner Ergänzung von hydraulischem Druckmedium bedarf.

Gleichwohl bedarf es natürlich von Zeit zu Zeit einer Zuführung von Druckmedium, sei es zur Aufrechterhaltung eines definierten Druckes im Druckspeicher, sei es zur Änderung dieses Druckes zum Zweck einer Anpassung des Systems an unterschiedliche Formengrößen und entsprechend verschiedene Formen-Schließkräfte.

Zu diesem Zweck ist die Puffereinheit 80 gemäß Fig. 2 mit einer in deren linkem Teil schematisch angedeuteten, insgesamt mit 97 bezeichneten Nachspeiseinrichtung versehen, die, der Einfachheit halber anhand ihrer Funktion erläutert wird, die mit einfachen konstruktiven Mitteln implementierbar ist:

In den das Joch 79 bildenden Gehäuseblock 97 ist eine durchgehende Bohrung 98 angebracht, innerhalb derer durch einen druckdicht verschiebbaren Kolben 99 axial beweglich ein zylindrischer Aufnahmeraum 101 für Hydraulikmedium begrenzt ist, der "von oben her" vollständig mit Hydraulikmedium befüllbar ist. Die zentrale Achse 102 dieser Bohrung 98 verläuft, gesehen in der Einbaukonfiguration des Pufferelements 80 vertikal. Der Kolben 99 ist, veranschaulicht durch eine Lippendichtung 103 in der Bohrung 98 hermetisch abgedichtet. Er ist über eine schematisch angedeutete Rückstellfeder 104 an einem in die Bohrung eingesetzten Sprengring 106 axial abgestützt. Der Aufnahmeraum 101 ist mittels eines in die Bohrung einschraubbaren Deckels 107, der sich an einer Ringdichtung 108 abstützt, hermetisch dicht verschließbar. Der Aufnahmeraum 101 ist über ein Rückschlagventil 109 an den Druckraum des Druckspeichers 96 bzw. den Ringraum 88 der Puffereinheit 80 angeschlossen. Dieses Rückschlagventil 109 ist durch höheren Druck in dem Aufnahmeraum 101 als im Druckspeicher 96 bzw. dem Ringraum 88 in seine Offenstellung gedrängt und im umgekehrten Falle sperrend.

Mittels der insoweit erläuterten Nachspeiseinrichtung ist, nachdem der Aufnahmeraum 101 vollständig mit Hydraulikflüssigkeit befüllt und mittels des Deckels 107 hermetisch abgesperrt ist, durch eine Verschiebung des Kolbens 99 im Sinne einer Verkleinerung des Druckraumes 101 Druckmedium unter Erhöhung des Speicherdruckes in den Druckspeicher 96 einspeisbar, dessen Nenndruck und Befüllungszustand in der geschilderten Weise in weiten Grenzen bedarfsgerecht veränderbar ist.

Mittels eines Manometers 111, das zweckmäßigerweise als elektronisches oder elektromechanisches Messgerät ausgebildet ist, das ein elektronisch verarbeitbares Ausgangssignal erzeugt, ist der Druck im Druckspeicher 96 überwachbar und zur Prozesssteuerung mittels einer nicht dargestellten elektronischen Steuereinheit nutzbar.

In zweckmäßiger Gestaltung der Puffereinheit 80 ist weiter ein manuell oder elektrisch gesteuert betätigbares Wege-Ventil 112 vorgesehen, über das Druckmedium aus dem Speicher 96 abgelassen oder diesem mittels eines nicht dargestellten Druckversorgungsaggregats zugeführt werden kann.

Die in der Fig. 3 insgesamt mit 310 bezeichnete Gestaltung einer erfindungsgemäßen Antriebseinrichtung für eine Extrusions-Blasformmaschine ist hinsichtlich der Funktion der anhand der Fig. 1a und 1b sowie 2 geschilderten Antriebseinrichtungen 10 vollkommen analog und hinsichtlich der konstruktiven Realisierung des Formenschließsystems im Wesentlichen identisch mit der anhand der genannten Figuren geschilderten Einrichtung. Soweit die in der Fig. 3 dargestellte Bau- und Funktionselemente mit Bezugszeichen belegt sind, die, verglichen mit Bezugszeichen der Fig. 1a, 1b und 2 um 300 erhöht, im übrigen jedoch identisch mit den vorausgehend benutzten Bezugszeichen sind, soll dies der Hinweis auf die Baugleichheit und/oder -analogie solchermaßen bezeichneter Teile hinweisen und auch den Verweis auf die diesbezüglichen Beschreibungsteile zu den Fig. 1a, 1b und 2 beinhalten, um Wiederholungen zu vermeiden.

Die Antriebseinrichtung 310 gemäß Fig. 3 unterscheidet sich von der Antriebseinrichtung 10 gem. Fig. 1a und 1b lediglich dadurch, dass der Kurbeltrieb 338 und das Formenschließsystem 323 zwischen den aufragenden Wangen 351/h und 351/v des U-förmigen Spannrahmens 351 angeordnet sind, wobei das Pufferelement 380 an der der hinteren Spannplatte 22/h entsprechenden Spannplatte 322/h derart angesetzt ist, dass diese das Pufferelement 380 trägt, dessen Kolben 383 hier mit seiner gesamten Kolbenfläche eine bewegliche Abgrenzung des Druckraumes 388 bildet, mit dem der Speicher 396 in kommunizierender Verbindung steht. Die Schubstange 342 des Kurbeltriebes 338 ist bei der Einrichtung 310 gemäß Fig. 3 gelenkig mit der Kolbenstange des Kolbens 383 verbunden. Die kinematische Kopplung der beiden Formhälften und der sie tragenden Spannplatten 322/h und 322/v über das Schubumkehrgetriebe 329 ist auf dieselbe Weise realisiert wie beim Ausführungsbeispiel gemäß den Fig. 1 a und 1 b.

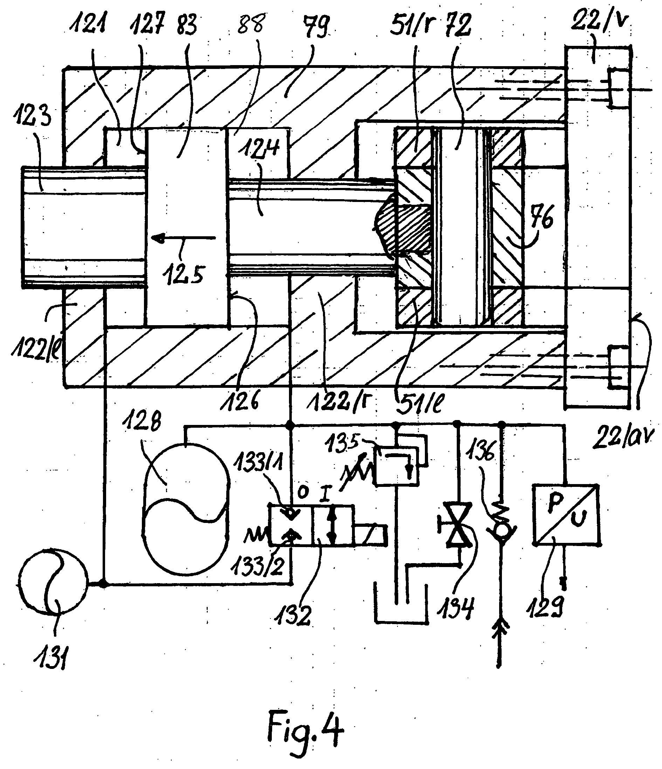

Zur Erläuterung eines weiteren Ausführungsbeispiels eines erfindungsgemäßen Antriebs für eine. Blasformmaschine sei nunmehr auf die Fig. 4 Bezug genommen, die, im Unterschied zum Ausführungsbeispiel gemäß Fig. 1a, eine Puffereinheit zeigt, deren Pufferelement als Differentialzylinder ausgebildet ist, der, analog zum Ausführungsbeispiel gemäß Fig. 1a ebenfalls in das Joch 79 integriert ist.

Soweit Elemente der Fig. 4 mit den selben Bezugszeichen belegt sind wie in den Fig. 1a, 1b bzw. 2, in der nachfolgenden Beschreibung jedoch nicht eigens erwähnt sind, soll dies, um Wiederholungen zu vermeiden, den Verweis auf diejenigen Beschreibungsteile beinhalten, die anhand der Fig 1a, 1b und 2 erstellt worden sind.

Bei der Puffereinheit gem. Fig. 4 sind durch den Pufferkolben 83 zwei Druckräume 88 und 121, von denen der links dargestellte mit dem Bezugszeichen 121 versehen ist, druckdicht gegeneinander abgegrenzt, die von Kolbenstangen unterschiedlichen Durchmessers durchsetzt sind, die ihrerseits in Bohrungen von Stirnwänden 122/L und 122r des das Pufferelement aufnehmenden Jochs druckdicht verschiebbar geführt sind. Die durch die zentrale Bohrung der Stirnwand 122/L hindurchtretende "linke" Kolbenstange 123, die an der dem Schließsystem abgewandten Seite angeordnet ist, hat, verglichen mit der Kolbenstange 124, die den Pufferkolben 83 zugfest mit dem Spannrahmen 51 verbindet, einen um 5% bis 10% größeren Durchmesser; dadurch ist die den Druckraum 88, der zur Einstellung der Schließkraft nutzbar ist, axial beweglich begrenzende Ringfläche 126 entsprechend größer als die die einseitige bewegliche axiale Begrenzung des zweiten Druckraumes 121 bildende Ringfläche 127 des Kolbens 83, so dass, wenn in diese beiden Druckräume 121 und 88 der selbe Druck eingekoppelt ist, auf den Kolben 83 eine resultierende Kraft wirkt, die den Kolben in Richtung des Pfeils 125 der Fig. 4 in eine Grundstellung drängt, die z.B. als Ausgangsposition für einen Blaszyklus der Maschine genutzt ist. In der zur Erläuterung gewählten Auslegung der Puffereinheit hat der Pufferkolben einen Durchmesser von 70 mm, die dickere Kolbenstange 123 einen Durchmesser von 40 mm und die rechte Kolbenstange 124 einen Durchmesser von 35 mm.

In den größerflächig begrenzten Druckraum 88 ist, in der Regel permanent, zumindest im Betrieb der Blasformmaschine, der Druck $p_s$ einkoppelbar, der in einem Speicher 128 herrscht, der bei der erfindungsgemäßen Einrichtung als Druckquelle benutzt wird, die z.B. auf einem Druck von 125 bar bis 135 bar gehalten ist und erforderlichenfalls von Zeit zu Zeit auf diesen Druck "nachladbar" ist.

Zur Überwachung dieses Druckes dient ein mechanisches oder elektronisches Manometer, das in der Fig. 4 durch den Druckwandler 129 schematisch repräsentiert ist.

Auch der kleinflächig begrenzte Druckraum 121 ist an einen durch einen weiteren Druckspeicher 131 repräsentierten "kleinen" Speicher angeschlossen, der in praktischen Fällen als reines Puffervolumen implementiert sein kann, als welches z.B. eine mindestens geringfüg elastisch aufweitbare Druckleitung, für sich gesehen, geeignet wäre.

Die beiden Druckräume 88 und 121 sind über ein 2/2-Wege-Ventil 132 miteinander kommunizierend verbindbar oder gegeneinander absperrbar. Das 2/2-Wege-Ventil 132 ist als elektrisch steuerbares Magnetventil ausgebildet, das eine federzentrierte Grundstellung 0 hat, in welcher die beiden Druckräume durch hermetisch dichte Sitzventile 133/1 und 133/2 gegeneinander abgesperrt sind. In der erregten Stellung I dieses Ventils 132 besteht kommunizierende Verbindung der beiden Druckräume untereinander sowie mit dem "kleinen" Druckspeicher 131.

Zur Sicherung der insoweit erläuterten Hydraulikeinheit der Puffereinheit gegen Überdruck ist ein Druckbegrenzungsventil 134 üblicher Bauart vorgesehen.

Mit 135 ist ein z.B. von Hand betätigbares Ablassventil bezeichnet, mittels dessen alternativ oder gemeinsam die beiden Speicher 128 und 131 sowie die Druckräume 121 und 88 entleert werden können. Über das als Rückschlagventil 136 dargestellte "Einlass"-Ventil können die vorgenannten Elemente wieder mit Druckmedium befüllt werden.

Für die Puffereinheit sei vorausgesetzt, dass eine Einstellvorrichtung vorgesehen ist, mittels derer der Kolben 83 der Puffereinheit in eine wählbare Position zwischen seinen Extremalpositionen einstellbar ist; diese Extremalpositionen sind z.B. durch die jeweiligen Anschlagpositionen an der einen oder der anderen Stirnwand 122/l bzw. 122/r markiert.

Eine derartige Einstelleinrichtung kann z.B. durch eine nicht dargestellte auf die linke Kolbenstange in axialer Richtung wirkende, selbsthemmende Stellschraube implementiert sein. Auch der Kurbeltrieb 38 kann zum Anfahren der genannten Zwischenposition genutzt werden, wobei durch die mechanische Kopplung des Kolbens 83 mit dem Spannrahmen 51, sowie des Spannrahmens mit dem Kurbeltrieb 38 die Funktion eines Messinstruments ermöglicht wird, das über die Erfassung der Winkelstellung der Kurbel 41 eine Erfassung der Kolbenposition ermöglicht. Hierbei ist natürlich stillschweigend vorausgesetzt, dass der Kurbeltrieb mit einem geeigneten Winkelstellungsgeber ausgerüstet ist, der die Ist-Position der Kurbel erfasst, und deren Sollposition mittels einer üblichen, nicht dargestellten elektronischen Steuereinheit der Blasformmaschine zur Hubsteuerung des Schließantriebes in üblicher Weise einsteuerbar ist.

Die anhand der Fig. 4 insoweit erläuterte Puffereinheit ist zur Vorbereitung und Durchführung eines Blaszyklus einer mit dieser Puffereinheit bestückten Blasform z.B. wie folgt benutzbar:

Davon ausgehend, dass das Schließsystem durch Betätigung des Kurbeltriebes 38 so weit geöffnet worden ist, dass die Formhälften und die diese tragenden Spannplatten 22/v und 22/h jeweils ihren größtmöglichen Abstand voneinander haben, so dass ein geblasener Hohlkörper leicht entnehmbar ist und auch schon entnommen ist, wird der Kolben 83 der Puffereinheit durch Druckbeaufschlagung beider Druckräume durch Öffnen des Ventils 132 in seine gemäß der Darstellung linke Extremalstellung verfahren; hierbei rücken die beiden Spannplatten und die von diesen getragenen Formhälften 12/v und 12/h, die über den Schubumkehrantrieb gegensinnig bewegungsgekoppelt sind, wieder ein wenig aufeinander zu, derart, dass bei gleichwohl weit geöffnetem Schließsystem ihr geringstmöglicher Abstand voneinander eingenommen wird, der in einer typischen Auslegung des Systems, d.h. bei einer Öffnungsweite desselben von 150 mm um ca. 10 mm kleiner sein kann als der maximale Abstand der Formhälften bzw. der diese tragenden Spannplatten, den diese voneinander einnehmen können.

Durch diese Gestaltung der Puffereinheit ist es möglich, das Schließsystem innerhalb eines Variationsbereiches von ca. 10 mm an hinsichtlich der Dicke verschieden dimensionierte Formhälften anpassen zu können.

Hiernach wird unter Ausnutzung des Kurbeltriebs 38 ein als "Einrichthub" bezeichnungsfähiger Teilhub ausgeführt, durch den die Formhälften 12/v und 12/h bis in die geschlossene Konfiguration der Form gebracht werden, jedoch noch keine nennenswerte Schließkraft aufgebaut ist, d.h. die Formhälften 12/v und 12/h lediglich im wesentlichen kräftefrei in Berührungskontakt miteinander stehen.

Diese Position ist durch geeignete Ansteuerung des elektrischen Antriebssystems des Kurbeltriebs 38 gezielt anfahrbar, z.B. mit Hilfe eines Winkel-Messsystems des Kurbeltriebs, da aus dem erfassten Schwenkwinkelbetrag die Position der Spannplatten 22/h und 22/v erkennen kann, die zug- und schubfest mit den oberen Endabschnitten der Schenkel 51/v und 51/h des Spannrahmens 51 verbunden sind, der in der genannten angefahrenen Position noch nicht im Sinne des Aufbaus einer Schließkraft vorgespannt ist; eine solche baut sich, ausgehend von der Position der Formhälften, die nach Ausführung des Einrichthubes erreicht ist, erst dann auf, wenn der Kurbeltrieb 38 zur Ausführung des Spannhubes angesteuert wird, der in die dem gestrecktem Zustand der Kurbel 41 und der Stange 42 des Kurbeltriebes 38 entsprechende Konfiguration führt, die jetzt einem Extremalwert der Aufweitung des Spannrahmens 51 entspricht, mit der eine dem Maximalwert der Schließkraft entsprechende Vorspannung des Spannrahmens 50 verknüpft ist; diese ist durch eine Beziehung der Form

$$\text{Schließkraft = Rahmensteifigkeit x Spannhub}$$

gegeben; hierbei entspricht der Spannhub der Differenz des Achsabstandes der Drehachsen 43 und 44 der Kurbel 41 und der Schubstange 42 im gestreckten Zustand des Kurbeltriebes 38 und des Abstandes dieser Achsen in derjenigen Konfiguration des Kurbeltriebes 38, die nach Ausführung des Einrichthubes gegeben ist, wobei diese Differenz gleich derjenigen zwischen dem Vollhub, der aus der anfänglichen - offenen - Extremalstellung des Schließsystems in die maximaler Schließkraft entsprechende Konfiguration führt, und dem Einrichthub ist, der aus der genannten Extremalstellung des Schließsystems in - noch - kräftefreie Schließstellung der Form führt.

In einer typischen Auslegung der Schließ-Antriebseinrichtung einschließlich des Spannrahmens 51 ist bei einem Einrichthub von 155 mm und einem Vollhub von 157 mm, d.h. einem Schließhub von 2 mm durch elastische Aufweitung des Spannrahmens 51 eine Schließkraft von 40 kN erreichbar.

Hieraus ergibt sich, dass durch geeignete Wahl der Dicken der Formhälften und der Spannplatten, gegebenenfalls unter Verwendung von Abstandsstücken zwischen den Formhälften und den Spannplatten, sowie durch geeignete Vorgabe des Einrichthubes die nutzbare Schließkraft des Systems vorgegeben bzw. eingestellt werden kann, z.B. derart, dass zum Schließen der Form ein Einrichthub von 154 mm erforderlich ist und der Vollhub dann zu einer Schließkraft von 60 kN führt.

Es versteht sich, dass alternativ zu dem Kurbeltrieb 38 als elektromechanischem Antrieb auch der als Pufferelement benutzte Differentialzylinder als Antriebseinheit für die Ausführung des Einrichthubes genutzt werden könnte, dies im Sinne eines elektro-hydraulischeh Antriebes, der mittels elektromagnetisch betätigbarer Ventile über eine elektronische Steuereinheit anzusteuern wäre.

Die hierfür erforderlichen elektronischen und hydraulischen schaltungstechnischen Maßnahmen werden als dem einschlägigen Fachmann bei Kenntnis des Zweckes zu Gebote stehend, d.h. im Bereich des Äquivalenten liegend und daher nicht als gesondert erläuterungsbedürftig angesehen.

**Patentansprüche**

1.  Antriebseinrichtung (10) für eine Extrusions-Blasformmaschine (11) zum Öffnen und Schließen einer Blasform (12), welche zwei Formhälften (12/v, 12/h) umfasst, in deren auseinander gerücktem Zustand ein durch Extrusion geschaffener schtauchförmiger Vorformling (16) in den Blasberelch zwischen den beiden Formhälften (12/v, 12/h) einbringbar ist, nach deren Schlleßen mit einer für den Blasvorgang erforderlichen Mindest-Schließkraft, die die Formhälften (12/v, 12/h) in dichtender Anlage aneinander hält, der Vorfomiling (16) in die Gebrauchsform aufblasbar ist und, sobald der geblasene Hohlkörper durch Abkühlen eine hinreichende Formstablltät erreicht hat, die Formhälften (12/v, 12/h) auseinandergerückt werden, um den geblasenen Hohlkörper (13), gegebenenfalls nach vorherigem Entfernen von Materlalüberständen (19, 21) des extrudierten Schlauchmaterials, die beim Schließen der Formhälften (12/v, 12/h) Im Kallbrterbereich und im Bodenbereich eines z.B. flaschenförmigen Hohlkörpers (13) von dem Vorförmling abgequetscht worden sind, entnehmen zu können, wobe die Antriebseinrichtung so ist, dass die Förmhälf ten (12/v, 12/h) auf gemeinsamen Geradführungselementen (24/l, 24/r) verschiebbar geführt und mittels eines Schubumkehrgetriebes (29) kinematisch derart miteinander gekoppelt sind, dass sie im Falle einer bewegungsteuerung mittels einer an einer der Formhälften angreifenden Antriebseinheit (28) einander entgegengesetzte translatorische Hübe ausführen, wobei eine die Formhälfte (12/v, 12/h) und die Antriebseinheit umfassende Formschließeinheit zwischen Im Wesentlichen parallelen Schenkeln (51/v, 51/h) eines Spannrahmens (51) angeordnet ist, deren einer eine Abstützung für die eine Formhälfte und deren anderer ein Widerlager für die an der anderen Formhälfte angreifende Antriebseinheit (28) bildet, wobei die Schließeinheit an mindestens einem der parallelen Schenkel (51/v, 51/h) über ein elastisch vorgespanntes Pufferelement (80) abgestützt ist, das auf eine der Schließkraft der Formhälften (12/v, 12/h) entsprechende Rückstellkraft vorspannbar ist, wobei der kinematische Totpunkt der Antriebseinheit (28), in Richtung der Schließbewegung der angetriebenen Formhälfte (12/v, 12/h) gesehen, jenseits des Schließhubabschnittes liegt, ab welchem die Formhälften (12/v, 12/h) aneinander In Anlage gehalten und abgestützt sind, wobei das Puffereiement (80) und die Schließeinheit dahingehend aufeinander abgestimmt sind, dass die Vorspannung des Pufferelements (80) im kinematischen Totpunkt der Antriebseinheit zumindest und annähernd der Mindestschließkraft des Schließsystems entspricht, **dadurch gekennzeichnet, dass** das Pufferelement (80) als doppelt wirkender hydraulische Linearzylinder ausgebildet ist, dessen Kolben (83) und Gehäuse mit jeweils einem der gegeneinander beweglichen Elemente der Schließeinheit und des Spannrahmens (51) schub- und zugfest verbunden sind, wobei der im Schlleßbetrieb elner Druekerhöhung unterworfene erste Druckraum (88) des Linearzylinders mit einem Druckspeicher (96, 128, 131) kommunizierend verbindbar ist, der auf einen Druck vorgespannt ist, durch dessen Einwirkung auf die Kolbenfläche (126) des linearzylinders eine der Antriebskraft entgegenwirkende Schließkraft resultiert, dass durch den Kolben (83) zwei Druckräume (88, 121) druckdicht gegeneinander abgegrenzt sind, die von Kolbenstangen (123,124) unterschiedlichen Durchmessers durchsetzt sind, wobei eine erste Kolbenstange (123) an einer der Schließeinheit abgewandten Seite des Kolbens (83) angeordnet Ist und wobei eine zweite Kolbenstange (124) den Kolben (83) zugfest mit dem Spannrahmen (51) verbindet und wobei die erste Kolbenstange (123) einen größeren Durchmesser als die zweite Kolben Stange (124) aufweist, so dass eine einen ersten der Druckräume (88) axial beweglich begrenzende Ringfläche (126) des Kolbens (83) größer ist als die den zweiten Druckraum (121) axial begrenzende Ringfläche (127), so dass, wenn In die Druckräume (88, 121) derselbe Druck eingekoppelt ist, auf den Kolben (83) eine resultierende Kraft wirkt, und dass die Druckräume (88,121) mittels eines 2/2-WegeVentils (132) wahlweise miteinander kommunizlerend verbindbar und gegeneinander absperrbar sind.

2. Antriebseinrichtung nach Anspruch 1, dadurch gekennzelchnet, dass als Antriebseinheit ein Kurbeltrieb (38) vorgesehen Ist, dessen Schubstange (42) gelenkig mit einer der Formhälften (12/v, 12/h) bzw. einer diese tragenden Spannplatte (22/v, 22/h) geKoppelt ist.

3. Antriebseinrichtung nach Anspruch 1 oder 2, **dadurch gekennzeichnet, dass** ein elektronischer oder elektromagnetischer Drucksensor (111) zur Überwachung des in dem Druckraum (88) des Pufferzylinders herrschenden Druckes vorgesehen Ist.

4. Antriebseinrichtung nach einem der vorangehenden Ansprüche, **dadurch gekennzeichnet, dass** der als Puffer genutzte Hydrozylinder an der der Antriebseinheit (28) abgewandten Außenseite des Schließsystems angeordnet ist, an dem er über sein Gehäuse abgestützt und schub- und zugfest verankert Ist, während der Kolben zugund schubfest mit dem benachbarten Schenketbereich (51/v) des Spannrahmens (51) der Antriebseinrichtung (10) verbunden ist.

5. Antriebseinrichtung nach einem der Ansprüche 1 bis 3, **dadurch gekennzeichnet, dass** der als Puffer genutzte Hydrozyllnder und der Kurbeltrieb (38) zwiechen einem Schenkel des Spannrahmens (51) und der diesem gegenüberliegenden Formhälfte des Schließsystems angeordnet sind.

6. Antriebseinrichtung nach Anspruch 5, **dadurch gekennzeichnet, dass** das Pufferelement in die Schubstange (42) des Kurbeltriebes integriert ist.

7. Antriebseinrichtung nach einem der vorangehenden Ansprüche, **dadurch gekennzeichnet, dass** das Volumen des Druckraumes (88) des Pufferzylinders klein gegen das Speichervolumen ist und höchstens 1/10 desselben vorzugsweise 1/50 bis 1/100 des Speichervolumens beträgt.

8. Antriebseinrichtung nach einem der Ansprüche 1 bis 7, **dadurch gekennzeichnet, dass** die Vorspannung des zur Schließkraftbegrenzung dienenden Pufferelements (80) einstellbar vorgebbar ist.

9. Antriebseinrichtung nach einem der Ansprüche 1 bis 8, **dadurch gekennzeichnet, dass** der Kolbenhub des Linearzylinders, gemessen zwischen den Extremalpositionen (Totpunkten) der Kolbenanordnung durch die Beziehung
Gesamthub $\geq$ Einrichthub + Spannhub
gegeben ist, wobei mit Elnrichthub derjenige Hub bezeichnet ist, der aus einer anfängtichen Extremalposition bis in die Schlleßposition der Formhälften führt, und mit Spannhub derjenige Kolbenhub, der durch Ansteuerung des Schließantriebs unter Mitnahme des Kolbens der Puffereinheit mit dem Aufbau der Schließkraft verknüpft ist.

**Claims**

1. Drive device (10) for an extrusion blow moulding machine (11) for opening and closing a blow mould (12) comprising two mould halves (12/v, 12/h) in the open state of which a tubular preform (16) created by extrusion can be introduced into the blow region between the two mould halves (12/v, 12/h), wherein once the mould halves (12/v, 12/h) have been closed with the minimum closing force required for the blowing process, which holds the mould halves (12/v, 12/h) together in a sealing manner, the preform (16) can be blown into the standard shape, wherein as soon as the blown hollow piece has achieved sufficient dimensional stability through cooling, the mould halves (12/v, 12/h) are separated from one another in order to remove the blown hollow piece (13), where appropriate following prior removal of protrusions (19, 21) of the extruded tube material that were squeezed out of the preform in the calibrating area and in the bottom region of a, for example, bottle-shaped hollow piece (13) when closing the mould halves (12/v, 12/h), wherein the drive device is configured such that the mould halves (12/v, 12/h) are moveably guided on shared linear guiding elements (24/l, 24/r) and kinematically coupled to one another by means of a thrust reversing system (29) such that, in the event of motion control by means of a drive unit (28) engaging with one of the mould halves, they perform opposing translatory strokes, wherein a mould closing unit comprising the mould halves (12/v, 12/h) and the drive unit is arranged between substantially parallel limbs (51/v, 51/h) of a clamping fixture (51), one of which limbs forms a support for one of the mould halves and the other an abutment for the drive unit (28) engaging with the other mould half., wherein the closing unit is supported on at least one of the parallel limbs (51/v, 51/h) by means of an elastically pre-stressed buffer element (80) that can be pre-stressed to a restoring force corresponding to the closing force of the mould halves (12/v, 12/h), wherein the kinematic dead centre of the drive unit (28), viewed in the direction of the closing movement of the driven mould half (12/v, 12/h), lies beyond the closing stroke phase, from which point the mould halves (12/v, 12/h) are held together and supported, wherein the buffer element (80) and the closing unit are adapted to each other in such a way that the pre-stress of the buffer element (80) at the kinematic dead centre of the drive unit corresponds at least and approximately to the minimum closing force of the closing system, **characterised in that** the buffer element (80) is formed as a double-acting hydraulic linear cylinder, the piston (83) and housing of which are tightly connected, in a manner guaranteeing tensile strength, to one of the elements of the closing unit and the clamping fixture (51) that are moveable relative to each other, wherein the first pressure chamber (88) of the linear cylinder subjected to an increase in pressure during the closing operation can be communicatively connected to a pressure accumulator (96, 128, 131), which is pre-stressed to a pressure, the action of which on the piston surface (126) of the linear cylinder results in a closing force counteracting the drive force, and **characterised in that** two pressure chambers (88, 121) are defined separately from each other in a pressure-tight manner by the piston (83), which are penetrated by piston rods (123,124) of different diameters, wherein a first piston rod (123) is arranged on a side of the piston (83) facing away from the closing unit and wherein a second piston rod (124) tightly connects the piston (83) to the clamping fixture (51) and wherein the first piston rod (123) has a larger diameter than the second piston rod (124) and consequently an axially moveable annular surface (126) of the piston (83) delimiting a first pressure chamber (88) is larger than the annular surface (127) axially delimiting the second pressure chamber (88), and consequently, if the same pressure is injected into both pressure chambers (88, 121) a resulting force acts on the piston (83) and the pressure chambers (88,121) can be communicatively connected to each another, or alternatively separated from each other, by means of a 2/2-way valve (132).

**2.** Drive device according to claim 1, **characterised in that** a crank drive (38) is provided as a drive unit, the push rod (42) of which is coupled in an articulated manner to one of the mould halves (12/v, 12/h) or a clamping plate (22/v, 22/h) supporting it.

**3.** Drive device according to claim 1 or claim 2, **characterised in that** an electronic or electromagnetic pressure sensor (111) is provided to monitor the pressure in the pressure chamber (88) of the buffer cylinder.

**4.** Drive device according to any one of the preceding claims, **characterised in that** the hydrocylinder used as a buffer is arranged on the outer side of the closing system facing away from the drive unit (28), on which it is supported and tightly anchored in a manner guaranteeing tensile strength by means of its housing, while the piston is tightly connected in a manner guaranteeing tensile strength to the adjacent limb region (51/v) of the clamping fixture (51) of the drive device (10).

**5.** Drive device according to any one of claims 1 to 3, **characterised in that** the hydrocylinder used as a buffer and the crank drive (38) are arranged between a limb of the clamping fixture (51) and the mould half of the closing system opposite it.

**6.** Drive device according to claim 5, **characterised in that** the buffer element is integrated into the push rod (42) of the crank drive.

**7.** Drive device according to any one of the preceding claims, **characterised in that** the volume in the pressure chamber (88) of the buffer cylinder is small in relation to the storage volume and not exceeding 1/10 thereof, preferably between 1/50 and 1/100 of the storage volume.

**8.** Drive device according to any one of claims 1 to 7, **characterised in that** the prestressing of the buffer element (80) serving to limit the closing force can be preset in advance.

**9.** Drive device according to any one of claims 1 to 8, **characterised in that** the piston stroke of the linear cylinder, measured between the extremal positions (dead centres) of the piston arrangement, is shown by the relation

$$\text{Total stroke} \geq \text{Setup stroke} + \text{Clamping stroke}$$

wherein setup stroke describes the stroke which leads from a starting extremal position to the closing position of the mould halves, and clamping stroke describes the piston stroke that is linked to establishment of the closing force by activating the closing drive along with the piston of the buffer unit.

**Revendications**

**1.** Dispositif d'entraînement (10) pour une machine (11) de moulage par extrusion-soufflage, permettant l'ouverture et la fermeture d'un moule de soufflage (12) comprenant deux demi-moules (12/v, 12/h), une paraison tubulaire (16) obtenue par extrusion pouvant être introduite dans la zone de soufflage située entre les deux demi-moules (12/v, 12/h) lorsque ceux-ci sont écartés l'un de l'autre, moule après la fermeture duquel au moyen d'une force de fermeture minimale nécessaire pour le processus de soufflage et maintenant les demi-moules (12/v, 12/h) en contact étanche l'un contre l'autre, la paraison (16) peut être soufflée à la forme d'utilisation et, dès que le corps creux soufflé a atteint par refroidissement une stabilité de forme suffisante, les demi-moules (12/v, 12/h) sont écartés l'un de l'autre afin de pouvoir retirer le corps creux soufflé (13), le cas échéant après avoir préalablement retiré des excédents de matière (19, 21) de la matière tubulaire extrudée qui ont été exprimés de la paraison lors de la fermeture des demi-moules (12/v, 12/h) dans la zone de calibrage et dans la zone de fond d'un corps creux (13) en forme de bouteille par exemple, sachant que le dispositif d'entraînement est tel que les demi-moules (12/v, 12/h) sont guidés de manière à pouvoir coulisser sur des éléments de guidage rectiligne communs (24/l, 24/r) et sont couplés cinématiquement l'un à l'autre, au moyen d'un mécanisme d'inversion de poussée (29), de telle sorte qu'ils accomplissent des courses de translation mutuellement opposées dans le cas d'une commande de mouvement au moyen d'une unité d'entraînement (28) agissant sur l'un des demi-moules, sachant qu'une unité de fermeture de moule comprenant les demi-moules (12/v, 12/h) et l'unité d'entraînement, est disposée entre des branches sensiblement parallèles (51/v, 51/h) d'un cadre de serrage (51), l'une de ces branches formant un soutien pour l'un des demi-moules et l'autre branche formant un contre-appui pour l'unité d'entraînement (28) agissant sur l'autre demi-moule, sachant que l'unité de fermeture s'appuie sur au moins une des branches parallèles (51/v, 51/h) par l'intermédiaire d'un élément tampon élastiquement précontraint (80) qui peut être précontraint à une force de rappel correspondant à la force de fermeture des demi-moules (12/v, 12/h), sachant que le point mort cinématique de l'unité d'entraînement (28) se trouve, considéré dans la direction du mouvement de fermeture du demi-moule entraîné (12/v, 12/h), au-delà de la partie de la course de fermeture à partir de laquelle les demi-moules (12/v, 12/h) sont maintenus en contact l'un contre l'autre et en appui, sachant que l'élément tampon (80) et l'unité de fermeture sont adaptés l'un à l'autre en ce sens que la précontrainte de l'élément tampon (80) au point mort cinématique de l'unité d'entraînement correspond au moins et approximativement à la force de fermeture minimale du système de fermeture, **caractérisé en ce que** l'élément tampon (80) est réalisé sous la forme d'un vérin hydraulique linéaire à double action dont le piston (83) et le boîtier sont respectivement reliés en solidarité de poussée et de traction à l'un des éléments mobiles en sens opposés de l'unité de fermeture et du cadre de serrage (51), sachant que la première chambre de pression (88) du vérin linéaire, soumise à une augmentation de pression pendant le fonctionnement de fermeture, peut être reliée en communication à un accumulateur de pression (96, 128, 131) qui est précontraint à une pression par l'action de laquelle une force de fermeture s'opposant à la force d'entraînement est produite sur la surface de piston (126) du vérin linéaire, **en ce que** le piston (83) délimite en étanchéité à la pression l'une par rapport à l'autre deux chambres de pression (88, 121) qui sont traversées par des tiges de piston (123, 124) de diamètres différents, sachant qu'une première tige de piston (123) est disposée sur un côté du piston (83) qui est éloigné de l'unité de fermeture et sachant qu'une deuxième tige de piston (124) relie le piston (83) en solidarité de traction au cadre de serrage (51), et sachant que la première tige de piston (123) présente un plus grand diamètre que la deuxième tige de piston (124), de sorte qu'une surface annulaire (126) du piston (83), délimitant de manière axialement mobile une première (88) des chambres de pression, est plus grande que la surface annulaire (127) délimitant axialement la deuxième chambre de pression (121), de sorte qu'une force résultante agit sur le piston (83) lorsque la même pression est injectée dans les chambres de pression (88, 121), et **en ce que** les chambres de pression (88, 121) peuvent être sélectivement, au moyen d'un distributeur 2/2 voies (132), reliées entre elles en communication ou isolées l'une par rapport à l'autre.

2. Dispositif d'entraînement selon la revendication 1, **caractérisé en ce qu'**il est prévu comme unité d'entraînement une transmission par bielle-manivelle (38) dont la bielle (42) est accouplée de manière articulée à l'un des demi-moules (12/v, 12/h) ou à une plaque de serrage (22/v, 22/h) portant ce dernier.

3. Dispositif d'entraînement selon la revendication 1 ou 2, **caractérisé en ce qu'**il est prévu un capteur de pression (111) électronique ou électromagnétique pour surveiller la pression régnant dans la chambre de pression (88) du vérin tampon.

4. Dispositif d'entraînement selon l'une des revendications précédentes, **caractérisé en ce que** le vérin hydraulique utilisé comme tampon est disposé sur le côté extérieur du système de fermeture, éloigné de l'unité d'entraînement (28), côté sur lequel il est ancré en solidarité de poussée et de traction et soutenu par l'intermédiaire de son boîtier, tandis que le piston est relié en solidarité de traction et de poussée à la région de branche voisine (51/v) du cadre de serrage (51) du dispositif d'entraînement (10).

5. Dispositif d'entraînement selon l'une des revendications 1 à 3, **caractérisé en ce que** le vérin hydraulique utilisé comme tampon et la transmission par bielle-manivelle (38) sont disposés entre une branche du cadre de serrage (51) et le demi-moule du système de fermeture qui fait face à cette branche.

6. Dispositif d'entraînement selon la revendication 5, **caractérisé en ce que** l'élément tampon est intégré dans la bielle (42) de la transmission par bielle-manivelle.

7. Dispositif d'entraînement selon l'une des revendications précédentes, **caractérisé en ce que** le volume de la chambre de pression (88) du vérin tampon est petit par rapport au volume de l'accumulateur et est égal à au plus 1/10 de ce dernier et de préférence à 1/50 à 1/100 du volume de l'accumulateur.

8. Dispositif d'entraînement selon l'une des revendications 1 à 7, **caractérisé en ce que** la précontrainte de l'élément tampon (80) servant à limiter la force de fermeture peut être prédéfinie de manière réglable.

9. Dispositif d'entraînement selon l'une des revendications 1 à 8, **caractérisé en ce que** la course de piston du vérin linéaire, mesurée entre les positions extrêmes (points morts) de l'ensemble de piston, est définie par la relation course totale ≥ course de préparation + course de serrage,

sachant qu'on appelle course de préparation la course qui mène d'une position extrême initiale à la position de fermeture des demi-moules, et course de serrage la course de piston qui, par asservissement de l'entraînement de fermeture en entraînant conjointement le piston de l'unité tampon, est liée à l'établissement de la force de fermeture.

Fig. 1a

Fig. 1b

Fig. 2

$d_K$

$d_S$

Fig. 3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4443195 A1
- JP 7032366 A

- WO 2006134031 A1